# EUROPEAN PATENT APPLICATION

(11) **EP 4 675 711 A1**
(43) Date of publication of application: **07.01.2026**
(21) Application number: 24763047.8
(22) Date of filing: 22.02.2024
(51) Int. Cl.: H01M 4/66

(54) **CURRENT COLLECTOR AND MANUFACTURING METHOD THEREFOR, ELECTRODE SHEET, BATTERY, AND ELECTRIC DEVICE**

(30) Priority: 02.03.2023 CN 202310196642
(71) Applicant: The Hong Kong Polytechnic University, Hung Hom, Kowloon Hong Kong (CN)
(72) Inventor: XU, Hailong, Hong Kong (CN); ZHENG, Zijian, Hong Kong (CN)
(74) Representative: Prüfer & Partner mbB Patentanwälte · Rechtsanwälte
(86) International application number: PCT/CN2024/078145
(87) International publication number: WO 2024/179364

(57) **Abstract**

The present application discloses a current collector, a preparation method thereof, an electrode plate, a battery, and an electrical apparatus. The current collector comprises a densified carbon nanotube film layer and a metal layer bonded to a surface of the densified carbon nanotube film layer. Compared to a commercial metal foil, the current collector provided in the present application has a weight which is 15% to 19% of a weight of a commercial metal foil and has a thickness which is 24% to 32% of a thickness of the commercial metal foil; while exhibiting similar electrical conductivity, electrochemical stability, and obviously higher mechanical strength and flexibility; and a battery using the current collector achieve increases in gravimetric energy density and volumetric energy density by 10.2% to 25.7% and 5.1% to 11.45%, respectively.

## Description

The present application claims priority to Chinese Patent Application No. 202310196642.2, filed with the China Patent Office on March 2, 2023, entitled "Current Collector, Preparation Method Thereof, Electrode Plate, Battery, and Electrical Apparatus", the entire contents of which are incorporated herein by reference.

### TECHNICAL FIELD

The present application relates to the field of battery technology, and specifically to a current collector, a preparation method thereof, an electrode plate, a battery, and an electrical apparatus.

### BACKGROUND

A current collector (CC) is a structure that collects current in a lithium-ion battery. In addition to that it is required to have excellent electron transfer capacity and mechanical strength, they are also required to have characteristics of light weight, thin thickness, flexibility, and low cost. Existing current collector is primarily made of metal foil, such as Cu foil (with a density of approximately 8.96 g·cm⁻³) or Al foil (with a density of approximately 2.70 g·cm⁻³). Metal foil typically does not contribute to the actual capacity of a lithium-ion battery, but it accounts for 15wt%-50wt% of total weight of the lithium-ion battery.

To improve the gravimetric energy density of the lithium-ion battery, existing art has employed thinning the metal foil to reduce its weight. For example, by reducing the thickness of the Cu foil from 9 µm to 6 µm, the gravimetric energy density of the lithium-ion battery can be increased by 3.7% to 6.5%. However, thinning the metal foil deteriorates its mechanical properties, reduces its flexibility, and increases fatigue.

Existing art uses lightweight materials, such as carbon materials, to replace the metal foil as a new current collector. This type of new current collector is prepared by assembling carbon-based materials, such as graphene and a carbon nanotube (CNT), into a thin film. Although the new current collector is lighter than the metal foil of the same thickness, its electrical conductivity and mechanical toughness is unsatisfactory for industrial applications.

### SUMMARY

A current collector, a preparation method thereof, an electrode plate, a battery, and an electrical apparatus are provided in the embodiments of the present application, to address the problem of excessive weight of a current collector in the existing art.

The technical solutions employed in the embodiments of the present application are as follows:

In a first aspect, a current collector is provided, including a densified carbon nanotube film layer and a metal layer bonded to a surface of the densified carbon nanotube film layer.

In a second aspect, a preparation method for a current collector is provided, including: providing a carbon nanotube and performing densification treatment on the carbon nanotube to obtain a densified carbon nanotube film layer; and growing a metal layer on a surface of the densified carbon nanotube film layer.

In a third aspect, an electrode plate is provided, including the current collector provided in the first aspect of the present application or the current collector prepared by the preparation method provided in the second aspect of the present application, and an active material layer bonded to at least one side of the current collector.

In a fourth aspect, the present application provides a battery, including the electrode plate provided in the third aspect of the present application.

In a fifth aspect, the present application provides an electrical apparatus, including the battery provided in the fourth aspect of the present application.

The current collector provided in the embodiments of the present application has the following advantages: the current collector includes the densified carbon nanotube film layer and a metal layer bonded to the surface of the densified carbon nanotube film layer. Compared to a commercial metal foil, the current collector weighs only 15% to 19% and has a thickness of 24% to 32% of the latter, while maintaining similar electrical conductivity and electrochemical stability and significantly improving mechanical strength and flexibility.

The preparation method for the current collector provided in the embodiments of the present application has the following advantages: the prepared current collector exhibits excellent toughness, ultra-light weight, ultra-thin thickness, and similar levels of electrical conductivity, electrochemical, and thermal stability.

The electrode plate provided in the embodiments of the present application has the following advantages: the capacity of the electrode plate is increased by approximately 50% compared to an electrode plate using a commercial metal foil.

The battery provided in the embodiments of the present application has the following advantages: the gravimetric energy density and the volumetric energy density of the battery are increased by 10.2% to 25.7% and 5.1% to 11.45%, respectively.

The electrical apparatus provided in the embodiments of the present application has the following advantages: the endurance capacity of the electrical apparatus is improved.

### BRIEF DESCRIPTION OF DRAWINGS

To more clearly illustrate the embodiments of the present application, the following briefly describes the drawings required for use in the embodiments or exemplary technical descriptions. Obviously, the drawings described below represent only some embodiments of the present application. A person of ordinary skill in the art can derive other drawings based on these drawings without inventive effort.
FIG. 1 is a schematic diagram of the preparation process for a densified carbon nanotube (DCNT) current collector provided in the embodiments of the present application;
FIG. 2 is a digital camera photograph (top), SEM cross-sectional view (middle), and SEM surface view (bottom) of a CNT thin film (in part (a)), a DCNT film layer (in part (b)), and a Cu-DCNT film layer (in part (c)) provided in Example 1 of the present application, and an Al-DCNT film layer (in part (d)) provided in Example 6 of the present application;
FIG. 3 shows surface roughness test results of the CNT thin film (in part (a)), the DCNT film layer (in part (b)), and the Cu-DCNT film layer (in part (c)) provided in Example 1 of the present application, and the Al-DCNT film layer (in part (d)) provided in Example 6 of the present application;
FIG. 4 shows test results of tensile strength (in part (a)) and electrical resistivity (in part (b)) of the CNT thin film and the DCNT film layer provided in Example 1 of the present application;
FIG. 5 shows the relationship between the metal layer thickness and the electrical resistivity, and the relationship between the metal layer thickness and the electrical conductivity of the Cu-DCNT film layer (in part (a)) prepared in Examples 1 to 5 of the present application and of the Al-DCNT film layer (in part (b)) prepared in Examples 6 to 10 of the present application;
FIG. 6 shows results of the areal density test (in part (a)),the thickness test (in part (b)), and the tensile strength test(in part (c)) of the DCNT film layer and Cu-DCNT film layer provided in Example 1 of the present application, the Al-DCNT film layer provided in Example 6, the Cu foil provided in Comparative Example 1, and the Al foil provided in Comparative Example 2;
FIG. 7 shows cyclic voltammetry (CV) test results of the Cu-DCNT film layer prepared in Example 1 of the present application, the Al-DCNT film layer prepared in Example 6, the commercial copper foil (Cu foil) provided in Comparative Example 1, and the commercial aluminum foil (Al foil) provided in Comparative Example 2;
FIG. 8 is digital camera photographs of the current collector before electrode plate preparation (top) and the electrode plate after the electrode plate preparation (bottom) in Example 11 and Comparative Example 1 (a), Example 13, and Comparative Example 2 (b) of the present application;
FIG. 9 is an SEM cross-sectional view of the sample prepared in Example 11 of the present application;
FIG. 10 shows the rate performance test results (in parts (a) and (c)) and cycle performance test results (in parts (b) and (d)) of the electrode plates prepared in Example 11, Comparative Example 1, Example 13, and Comparative Example 2 of the present application;
FIG. 11 is a graph showing curves of the charge-discharge voltage of the electrode plate prepared in Example 11(in part (a)), Comparative Example 1 (in part (b)), Example 13 (in part (c)), and Comparative Example 2 (in part (d)) of the present application.
FIG. 12 shows curves of the charge-discharge voltage of the prepared coin-type battery in Example 16 (in part (a)), Example 17 (in part (b)), Example 18(in part (c)) at different cycles;
FIG. 13 shows the constant current cycling test results at 0.5C of the coin-type battery prepared in Example 16 and the coin-type battery prepared in Comparative Example 3 of the present application;
FIG. 14 shows the structural schematics (in part (a)) and the test results (in part (b)) of gravimetric energy density and volumetric energy density for the coin-type batteries prepared in Examples 16, 18, and 19 of the present application and for the batteries prepared in Comparative Examples 4 to 9;
FIG. 15 shows the flexibility test results of the soft-pack battery prepared in Example 20 of the present application;
FIG. 16 shows the schematic diagram (in part (a)) of drilling a DCNT film layer by a laser drilling method to prepare a DCNT film layer with a pore in Examples 21 to 23 of the present application, and the SEM image (in part (b)) of DCNT film layer with the pore, and an SEM image of Cu-DCNT TPP (in part (c)); the results of constant current cycling test of a Cu-DCNT TPP/Gr||LCO/Al DCNT TPP full cell at 0.5 C (in part (d)); self-extinguishing test results of a Cu/Gr∥LCO/Al pouch cell and a Cu-DCNT TPP/Gr∥LCO/Al-DCNT TPP (in part (e));
FIG. 17 shows the cycling performance of a lithium metal battery (LMB). Take the Cu-DCNT sample prepared in Example 1 of the present application and the commercial Cu foil provided in Comparative Example 1 as a current collector, the current collector is deposited with lithium metal to prepare the lithium metal anode, and then the lithium metal anode is assembled with different cathodes to obtain the LMB.

### DETAILED DESCRIPTION

To make the objectives, technical solutions, and advantages of the present application more clearly understood, the present application is described in detail below with reference to the accompanying drawings and embodiments. It should be understood that the specific embodiments described herein are intended only to illustrate the present invention and are not intended to limit the present application.

It should be noted that when a component is referred to as being "fixed to" or "disposed on" another component, it may be directly or indirectly attached to the other component. When a component is referred to as being "connected to" another component, it may be directly or indirectly connected to the other component. Terms such as "upper," "lower," "left," and "right" are used to indicate positions or positional relationships based on the positions or positional relationships shown in the accompanying drawings for ease of description only. They do not indicate or imply that the devices or components referred to must have a specific orientation, be constructed, or operate in a specific orientation. Therefore, they should not be construed as limitations on the present application. Persons skilled in the art will understand the specific meanings of these terms based on specific circumstances. The terms "first" and "second" are used solely for descriptive purposes and should not be construed to indicate or imply relative importance or to implicitly specify the number of technical features. "multiple" means two or more, unless otherwise specifically defined.

To illustrate the technical solutions of the present application, the following detailed description is provided with reference to specific figures and embodiments.

In a first aspect, a current collector is provided in an embodiment of the present application. The current collector includes a densified carbon nanotube film layer and a metal layer bonded to a surface of the densified carbon nanotube film layer.

An m-DCNT film layer, as the current collector, is provided in an embodiment of the present application. Under the circumstances that the m-DCNT film layer has a weight which is 15% to 19% of a weight of a commercial metal foil and has a thickness which is 24% to 32% of a thickness of the commercial metal foil, the m-DCNT film layer exhibits similar electrical conductivity and electrochemical stability to the commercial metal foil, while has higher mechanical strength and flexibility than the commercial metal foil.

The densified CNT (DCNT) film layer in an embodiment of the present application refers to a thin film made of a carbon nanotube (CNT) with a higher density than a conventional CNT film. The conventional CNT film typically has a density of approximately 0.27 mg/mm³. Optionally, the density of the densified carbon nanotube film layer is N times the density of the conventional carbon nanotube film, where N is greater than or equal to 1.5. For example, N is 1.5, 2, 3, 4, or 5. Optionally, the density of the densified carbon nanotube film layer is between 1 mg/mm³ and 1.4 mg/mm³. For example, the density of the densified carbon nanotube film layer can be 1 mg/mm³, 1.1 mg/mm³, 1.2 mg/mm³, 1.3 mg/mm³, 1.4 mg/mm³, etc.

In an embodiment of the present application, a metal layer is bonded to a surface of the densified carbon nanotube film layer to form a metal-coated densified CNT (m-DCNT) film layer. The metal layer can be bonded to a single side surface of the densified carbon nanotube film layer or to all side surfaces of the densified carbon nanotube film layer. It is understood that the m-DCNT film layer serves as the current collector.

In some embodiments, the metal layer is a copper layer or an aluminum layer. In other embodiments, the metal layer can be a metal layer other than the copper layer or the aluminum layer, such as a silver layer or a gold layer, etc.

In some embodiments, the copper layer is disposed on the surface of a densified carbon nanotube film layer to form a copper-coated densified carbon nanotube (Cu-DCNT) film layer, which can serve as the current collector of an anode of a battery.

In other embodiments, an aluminum layer is disposed on the surface of a densified carbon nanotube film layer to form an aluminum-coated densified carbon nanotube (Al-DCNT) film layer, which can serve as the current collector of an anode of a battery.

In some embodiments, the metal layer has a thickness less than or equal to 900 nm. For example, the thickness of the metal layer may be, but is not limited to, any of 50 nm, 100 nm, 200 nm, 300 nm, 400 nm, 500 nm, 600 nm, 700 nm, 800 nm, or 900 nm, or a range of between any two of 50 nm, 100 nm, 200 nm, 300 nm, 400 nm, 500 nm, 600 nm, 700 nm, 800 nm, or 900 nm.

Compared to metals, the carbon nanotube has a poor electrical conductivity. By bonding a metal layer to the surface of the densified carbon nanotube film, a conductive performance of the m-DCNT film layer is enhanced. As the thickness of the metal layer increases, the electrical conductivity of the m-DCNT film layer increases, then gradually approaches an electrical conductivity of the metal foil. By controlling the thickness of the metal layer to less than 900 nm, the conductive performance of the m-DCNT film layer is maintained, and preventing the thickness and weight of the m-DCNT film layer increasing caused by excessive thickness of the metal layer.

In some embodiments, the current collector has a thickness of 3.2 µm to 3.8 µm, an areal density of 0.82 mg/cm² to 1.37 mg/cm², and a toughness of 17.31 J/cm³ to 22.25 J/cm³. In the embodiments of the present application, the thickness refers to a distance between two sides of a flat film layer; the areal density is a mass of per unit area of a substance with a specified thickness; and toughness refers to an absorbing energy ability of a material during plastic deformation and fracture. Greater toughness reduces the likelihood of brittle fracture. For example, the thickness of the current collector is 3.2 µm, 3.3 µm, 3.4 µm, 3.5 µm, 3.6 µm, 3.7 µm, or 3.8 µm. For example, the areal density of the current collector is 0.82 mg/cm², 0.9 mg/cm², 1 mg/cm², 1.1 mg/cm², 1.2 mg/cm², 1.3 mg/cm², or 1.37 mg/cm². For example, the toughness of the current collector is 17.31 J/cm³, 18 J/cm³, 19 J/cm³, 20 J/cm³, 21 J/cm³, 22 J/cm³, or 22.25 J/cm³.

Within the above ranges, the m-DCNT film layer, as the current collector, not only has electrical conductivity and electrochemical stability comparable to the commercial metal foil, but also has the advantages of being lighter, thinner, and more flexible.

In some embodiments, the densified carbon nanotube film layer has a pore filled with a flame retardant. In addition, the flame retardant refers to a functional auxiliary agent that imparts flame retardancy to a flammable material. In the embodiments of the present application, drilling the pore in the densified carbon nanotube film layer and filling the pore with the flame retardant, improves the flame retardancy of the current collector, so as that an electrode plate and a battery using the current collector have self-extinguishing capabilities.

In some embodiments, the pore arranged in the densified carbon nanotube film layer can be a through pore or a blind pore. Optionally, the densified carbon nanotube film layer has a plurality of pores including the pore. The plurality of pores are arranged apart, an average spacing between two adjacent pores of the plurality of pores is 100 µm to 200 µm, and an average pore size of the pore is 40 µm to 60 µm.

In some embodiments, the flame retardant includes at least one of triphenyl phosphate (TPP), tris(2-chloroethyl) phosphate, tris(2,3-dichloropropyl) phosphate, tris(2,3-dibromopropyl) phosphate, cresyl diphenyl phosphate, tricresyl phosphate, (2-ethylhexyl) diphenyl phosphate, and tetrabromobisphenol A.

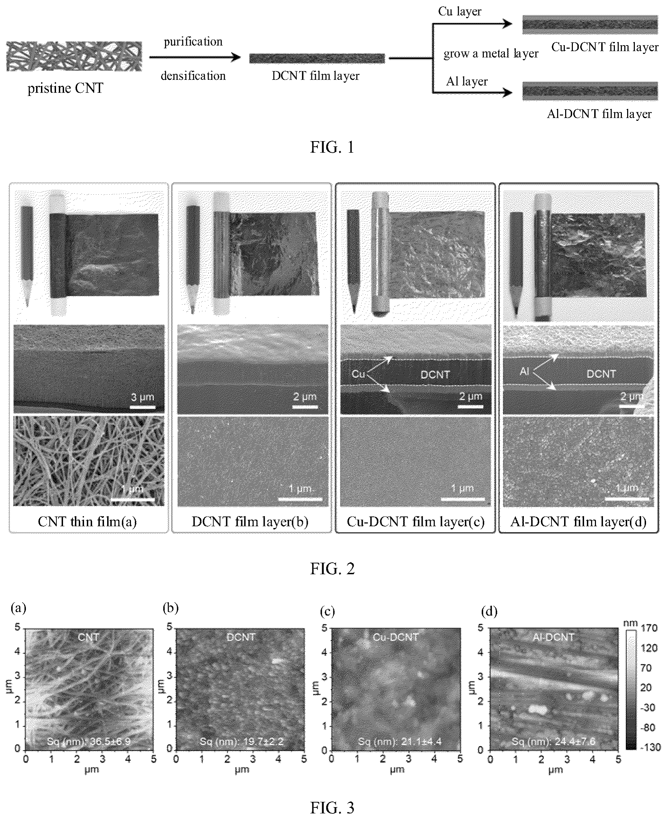

In a second aspect, a preparation method for a current collector is provided in an embodiment of the present application. As shown in FIG. 1, the preparation method includes: providing a carbon nanotube and performing densification treatment on the carbon nanotube to obtain a densified carbon nanotube film layer; and growing a metal layer on a surface of the densified carbon nanotube film layer.

The current collector prepared by the preparation method provided in the second aspect of the present invention exhibits excellent toughness, ultralight weight, ultrathin thickness, and exhibits electrical conductivity, electrochemical, and thermal stability comparable to the commercial metal foil.

In some embodiments, the carbon nanotube is a pristine CNT, i.e., a carbon nanotube that have not been performed on any treatment since the carbon nanotube is prepared.

In some embodiments, a carbon nanotube is prepared by a floating catalyst chemical vapor deposition (FCCVD) method. Preparing the carbon nanotube by the FCCVD method is cost-effective, thus can effectively reduce the manufacturing cost of the current collector.

In some embodiments, a metal layer is deposited on the surface of the densified carbon nanotube film layer by a preparation method of vacuum deposition, electroplating, or electroless plating. A high-quality metal layer can be prepared by each of these preparation methods.

In some embodiments, the preparation method of vacuum deposition includes, but are not limited to, electron beam induced deposition (EBID), sputter coating, and/or thermal evaporation thin film deposition.

In some embodiments, the densification treatment for the carbon nanotube thin film includes an annealing treatment, a sulfuric acid treatment, and a chlorosulfonic acid treatment. The carbon nanotube thin film herein refers to a film containing carbon nanotubes, that is, a thin film made of carbon nanotubes, specifically the conventional carbon nanotube thin film described above. In embodiments of the present application, the densification treatment removes voids and gaps within the carbon nanotube thin film to obtain the densified carbon nanotube film layer. The densified carbon nanotube film layer has thinner thickness, lower surface roughness, higher tensile strength, and lower electrical resistivity than the conventional carbon nanotube.

In some embodiments, the annealing treatment includes heat treating the carbon nanotube thin film at 900°C to 1100°C in a protective atmosphere (e.g., an argon atmosphere) for 12 hrs to 24 hrs. The annealing treatment removes impurities from the carbon nanotube thin film, thereby achieve purification of the carbon nanotubes.

In some embodiments, the sulfuric acid treatment includes immersing the carbon nanotube thin film in a concentrated sulfuric acid for 12hrs to 36 hrs. The sulfation treatment removes impurities from the carbon nanotube thin film, thereby achieve purification of the carbon nanotubes.

In some embodiments, the chlorosulfonic acid treatment includes: dropwise adding excess chlorosulfonic acid to the carbon nanotube thin thin film until the carbon nanotube thin film is completely covered with the chlorosulfonic acid, leaving the carbon nanotube thin film completely covered with the chlorosulfonic acid to stand for 10 mins to 60 mins, and heating it at 130°C to 190°C to completely volatilize the chlorosulfonic acid.

In some embodiments, before growing the metal layer on the surface of the densified carbon nanotube film, the preparation method further includes: drilling a pore in the densified carbon nanotube film layer and filling the pore with a flame retardant.

In some embodiments, the pore is drilled in the densified carbon nanotube film layer by a laser drilling method. During a drilling process, a size, a depth, or a volume of the pore can be adjusted by adjusting a laser power. In embodiments of the present application, drilling a pore in the densified carbon nanotube film and filling the pore with a flame retardant, improves the flame retardancy of the current collector, so as that an electrode plate and a battery using the current collector have self-extinguishing capabilities.

In some embodiments, the flame retardant is filled into the pores by a vacuum-assisted infiltration process. The vacuum-assisted infiltration process includes: dissolving a flame retardant in a solvent to obtain a mixed solution, filling the mixed solution into the pore by vacuum infiltration, and drying and solidifying the mixed solution in the pore. For example, triphenyl phosphate (TPP) and polyimide are mixed and dissolved in N-methyl-2-pyrrolidone to form a mixed solution, the mixed solution is filled into the pore, and the mixed solution in the pore is dried, and performed imidization on by being heated in air, so as to obtain a TPP-modified DCNT (i.e., DCNT-TPP) film. Subsequently, a metal layer is respectively coated on both sides of the DCNT-TPP film to obtain a current collector based on DCNT-TPP. Optionally, the heating treatment process for imidization is set as follows: (1) 50°C, 60°C, 70°C, and 80°C for 5 mins, (2) 100°C, 120°C, and 150°C for 10 mins, and (3) 180°C and 210°C for 30 mins.

In a third aspect, an electrode plate is provided in embodiments of the present application. The electrode plate includes the current collector provided in the first aspect of the present application or the current collector prepared by the preparation method provided in the second aspect of the present application, and an active material layer bonded to at least one side of the current collector.

Compared to an electrode plate using commercial metal foil, an electrode plate provided in the third aspect of the present application has a capacity increase of approximately 50%.

In some embodiments, the active material layer is an anode active material layer, including at least one of graphite, Li₄Ti₅O₁₂, Si, Sn, and P.

In some embodiments, under the circumstances that the current collector is an anode current collector, the active material layer disposed on the surface of the current collector is an anode active material layer.

In some embodiments, the active material layer is a cathode active material layer, including at least one of LiFePO₄ (LFP), LiCO₂ (LCO), LiMn₂O₄, LiNiₓCo_{y}MnzO₂ (NCM, where x+y+z=1, 0<x<1, 0<y<1, and 0<z<1), and LiNi_{0.8}Co_{0.15}Al_{0.05}O₂ (NCA).

In some embodiments, under the circumstances that the current collector is a cathode current collector, the active material layer disposed on the surface of the current collector is a cathode active material layer.

In a fourth aspect, provide a battery is provided in an embodiment of the present application. The battery includes the electrode plate provided in the third aspect of the present application.

The gravimetric energy density and the volumetric energy density of the battery provided in the fourth aspect of the present application, compared to the gravimetric energy density and the volumetric energy density of the commercial metal foil, are increased respectively by 10.2% to 25.7% and 5.1% to 11.45%

In a fifth aspect, an electrical apparatus is provided in an embodiment of the present application. The electrical apparatus includes the battery provided in the fourth aspect of the present application.

In some embodiments, the electrical apparatus may be, but is not limited to, a vehicle, a mobile phone, a portable device, a laptop computer, a ship, a spacecraft, an electric toy, an electric tool, or the like. The vehicle may be, but is not limited to, a gasoline-powered vehicle, a gas-powered vehicle, or a new energy vehicle, and the new energy vehicle may be, but is not limited to, a pure electric vehicle, a hybrid vehicle, or an extended-range vehicle. Optionally, a battery is used to form the power supply system of the electrical apparatus.

The following is described with reference to specific embodiments.

### Example 1

At S1, a CNT thin film was prepared by a method of floating catalyst chemical vapor deposition (FCCVD). A cross-sectional image was obtained using a FIB, and the CNT thin film was observed to have a thickness of approximately 11 µm.

At S2, the CNT thin film was subjected to high-temperature annealing treatment (at 950°C, in an argon atmosphere, for 12 hrs), sulfuric acid treatment(immersed in a concentrated sulfuric acid for 12 hrs) to remove impurities, and then HSO₃Cl treatment (excess chlorosulfonic acid was dropwise added to the flattened CNT thin film until the CNT thin film was completely covered with the chlorosulfonic acid, followed by left to stand for 15 mins and then heated to 160°C to completely volatilize the chlorosulfonic acid), so as to obtain a DCNT film layer.

At S3. a Cu layer (with a thickness of 600 nm) was deposited on a surface of the DCNT film layer by magnetron sputtering (with a sputtering power set to 60 W, a sputtering time set to 90 mins), so as to obtain a Cu-DCNT film layer.

### Example 2

The difference between this example and Example 1 is that the Cu layer at S3 was deposited to a thickness of 450 nm, the sputtering power was set to 65 W, and the sputtering time was set to 60 mins.

### Example 3

The difference between this example and Example 1 is that the Cu layer at S3 was deposited to a thickness of 300 nm, the sputtering power was set to 60 W, and the sputtering time was set to 45 mins.

### Example 4

The difference between this example and Example 1 is that the Cu layer at S3 was deposited to a thickness of 150 nm, the sputtering power was set to 60 W, and the sputtering time was set to 20 mins.

### Example 5

The difference between this example and Example 1 is that a thickness of the Cu layer deposited at S3 was 0 nm.

### Example 6

The difference between this example and Example 1 is:
at S3, an Al layer (with a thickness of 900 nm), sputtering power was deposited on a surface of the DCNT film layer by magnetron sputtering (with a sputtering power set to 70 W, a sputtering time set to 120 mins), so as to obtain an Al-DCNT film layer.

### Example 7

The difference between this example and Example 6 is that the Al layer at S3 layer was deposited to a thickness of 500 nm, the sputtering power was set to 70 W, and the sputtering time was set to 67 mins.

### Example 8

The difference between this example and Example 6 is that t the Al layer at S3 layer was deposited to a thickness of 300 nm, the sputtering power was set to 70 W, and the sputtering time was set to 40 mins.

### Example 9

The difference between this example and Example 6 is that the Al layer at S3 layer was deposited to a thickness of 140 nm, the sputtering power was set to 70 W, and the sputtering time was set to 18 mins.

### Example 10

The difference between this example and Example 6 is that a thickness of the Al layer deposited at S3 was 0 nm.

### Example 11

Based on Example 1, a Cu-DCNT/Gr anode was prepared by a slurry coating method, where a mass loading of a Gr anode active material was 10 mg/cm², and a slurry had a PVDF: Super: Gr ratio of 1:1:8.

### Example 12

Based on Example 1, a Cu-DCNT/LTO anode was prepared, where an LTO anode active material had a mass loading of 10 mg/cm², and a slurry had a PVDF: Super: Gr ratio of 1:1:8.

### Example 13

Based on Example 6, an Al-DCNT/LCO cathode was prepared, where a LCO cathode active material had a mass loading of 24 mg/cm², and a slurry had a PVDF: Super: LCO ratio of 1:1:8.

### Example 14

Based on Example 6, an Al-DCNT/NMC811 cathode was prepared, where a NMC811 cathode active material had a mass loading of 24 mg/cm², and a slurry had a PVDF: Super: LCO ratio of 1:1:8.

### Example 15

Based on Example 6, an Al-DCNT/LFP cathode was prepared, where a LFP cathode active material had a mass loading of 24 mg/cm², and a slurry had a PVDF: Super: LCO ratio of 1:1:8).

### Example 16

A coin-type Cu-DCNT/Gr∥LCO/Al-DCNT battery was prepared using the electrode plates respectively prepared in Example 11 and Example 13. The electrode plate prepared in Example 11 was used as an anode, and the electrode plate prepared in Example 13 was used as a cathode.

### Example 17

A coin-type Cu-DCNT/LTO∥LCO/Al-DCNT battery was prepared using the electrode plates respectively prepared in Example 12 and Example 13. The electrode plate prepared in Example 12 was used as an anode, and the electrode plate prepared in Example 13 was used as a cathode.

### Example 18

A coin-type Cu-DCNT/Gr∥NMC811/Al-DCNT battery was prepared using the electrode plates respectively prepared in Example 11 and Example 14. The electrode plate prepared in Example 11 was used as an anode, and the electrode plate prepared in Example 14 was used as a cathode.

### Example 19

A coin-type Cu-DCNT/Gr∥LFP/Al-DCNT battery was prepared using the electrode plates respectively prepared in Example 11 and Example 15. The electrode plate prepared in Example 11 was used as an anode, and the electrode plate prepared in Example 15 was used as a cathode.

### Example 20

A soft-pack Cu-DCNT/Gr∥LCO/Al-DCNT battery was prepared using the electrode plates respectively prepared in Example 11 and Example 13. The electrode plate prepared in Example 11 was used as an anode, and the electrode plate prepared in Example 13 was used as a cathode.

### Example 21

The difference between this example and Example 11 is:
a pore was drilled in a DCNT film layer by laser drilling, triphenyl phosphate (TPP), as a flame retardant, was filled into the pore by a vacuum-assisted infiltration process, and a Cu layer was then deposited on a surface of the DCNT film layer by a method of vacuum deposition, so as to obtain a Cu-DCNT TPP/Gr anode.

### Example 22

The difference between this example and Example 13 is:
a pore was drilled in a DCNT film layer by laser drilling, triphenyl phosphate (TPP), as a flame retardant, was filled into the pore by a vacuum-assisted infiltration process, and an Al layer was then deposited on a surface of the DCNT film layer by a method of vacuum deposition, so as to obtain an Al-DCNT TPP/Gr anode.

Preparation of an Al-DCNT TPP/LCO cathode.

### Example 23

A Cu-DCNT TPP/Gr∥LCO/Al-DCNT TPP battery was prepared using the electrode plates respectively prepared in Example 21 and Example 22. The electrode plate prepared in Example 21 was used as an anode, and the electrode plate prepared in Example 22 was used as a cathode.

### Comparative Example 1

At S1, a commercial Cu foil was provided.

At S2, a Cu/Gr anode was prepared, where a Gr anode active material with a mass loading of 10 mg/cm².

### Comparative Example 2

At S1, a commercial Al foil was provided.

At S2, an Al/ LCO anode was prepared, where a LCO anode active material with a mass loading of 24 mg/cm².

### Comparative Example 3

A coin-type Cu/Gr∥Al/LCO battery was prepared using the electrode plates respectively prepared in Comparative Example 1 and Comparative Example 2. The electrode plate prepared in Example 11 was used as an anode, and the electrode plate prepared in Example 15 was used as a cathode.

### Comparative Example 4

A coin-type Cu/Gr∥Al/LCO battery was prepared. A Cu layer of the battery had a thickness of 10 µm, and an Al layer of the battery had a thickness of 16 µm.

### Comparative Example 5

A coin-type Cu/Gr∥Al/LFP battery was prepared. A Cu layer of the battery had a thickness of 10 µm, and an Al layer of the battery had a thickness of 16 µm.

### Comparative Example 6

A coin-type Cu/Gr∥Al/NMC811 battery was prepared. A Cu layer of the battery had a thickness of 10 µm, and an Al layer of the battery had a thickness of 16 µm.

### Comparative Example 7

A coin-type Cu/Gr∥Al/LCO battery was prepared. A Cu layer of the battery had a thickness of 6 µm, and an Al layer of the battery had a thickness of 16 µm.

### Comparative Example 8

A coin-type Cu/Gr∥Al/LFP battery was prepared. A Cu layer of the battery had a thickness of 6 µm, and an Al layer of the battery had a thickness of 16 µm.

### Comparative Example 9

A coin-type Cu/Gr∥Al/NMC811 battery was prepared. A Cu layer of the battery had a thickness of 6 µm, and an Al layer of the battery had a thickness of 16 µm.

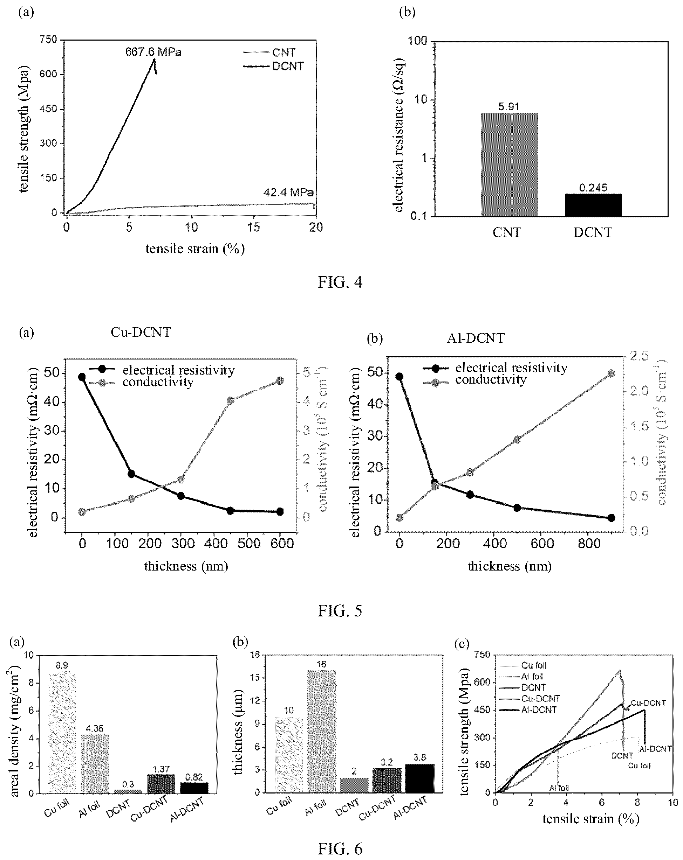

To verify the advancements of the embodiments of the present application, the following tests were conducted on samples of the examples and the comparative examples respectively.
1. The CNT thin film prepared at S1, the DCNT film layer prepared at S2, and the Cu-DCNT film layer prepared at S3 of Example 1, and the Al-DCNT film layer prepared at S3 of Example 6, were characterized as follows: ①, ②, ③, and ④.
① As shown in FIG. 2, the upper images with a pencil as references in parts (a), (b), (c), and (d) respectively correspond to digital camera photographs of the CNT thin film, the DCNT film layer, the Cu-DCNT film layer, and the Al-DCNT film layer. The test results show that the CNT thin film is dark black, the DCNT film layer obtained by densification is shiny metallic, and the Cu-DCNT film layer and Al-DCNT film layer obtained by growing a metal layer on the DCNT film layer are copper-red and silver-colored, respectively.
② As shown in FIG. 2, the middle images in parts (a), (b), (c), and (d) respectively correspond to cross-sectional images, captured by a scanning electron microscope (SEM), of the CNT thin film, the DCNT film layer, the Cu-DCNT film layer, and the Al-DCNT film layer. As shown in FIG. 2, the bottom images in parts (a), (b), (c), and (d) respectively correspond to SEM surface images, captured by SEM, of the CNT thin film, the DCNT film layer, the Cu-DCNT film layer, and the Al-DCNT film layer. The cross-sectional images and the surface images show that the CNT thin film having a thickness of 11.1 µm is densified to form a DCNT film layer having a thickness of 2.0 µm, that is, the densification treatment reduces the thickness of the CNT thin film.
③ As shown in FIG. 3, parts (a), (b), (c), and (d) respectively correspond to the surface roughness test results of the CNT thin film prepared at S1, the DCNT film layer prepared at S2, the Cu-DCNT film layer prepared at S3 of Example 1, and the Al-DCNT film layer prepared at S3 of Example 6. In these parts of FIG. 3, Sq represents the standard deviation of asperity height of a micro-protrusion. The test results show that the CNT thin film having a surface roughness of 36.5±6.9 nm is densified to form a DCNT film layer having a surface roughness of 19.7±2.2 nm, that is, the densification treatment dramatically reduces the surface roughness of the CNT thin film. Additionally, the Cu-DCNT film layer and the Al-DCNT film layer both have a surface roughness less than 25 nm.
④ As shown in FIG. 4, part (a) shows the tensile strength test results of the CNT thin film prepared at S1and the DCNT film layer prepared at S2 of Example 1; part (b) shows the resistivity test results of the CNT thin film prepared at S1, the DCNT film layer prepared at S2 of Example 1. The test results show that the CNT thin film having a tensile strength of 42.4 MPa and an electrical resistance of 5.91Ω/sq is densified to form a DCNT film layer having a tensile strength of 667.6 MPa and an electrical resistance of 0.245 Ω/sq, that is, the densification treatment increases the tensile strength of the CNT thin film and reduces the tensile strength of the CNT thin film.

2. As shown in FIG. 5, part (a) shows the relationship among the thickness, electrical resistivity, and electrical conductivity of the Cu-DCNT film layer samples prepared in Examples 1 to 5, respectively. Part (b) shows the relationship among the thickness, electrical resistivity, and electrical conductivity of the Al-DCNT film layer samples prepared in Examples 6 to 10, respectively. The test results show that as the thickness of the Cu layer and thickness of the Al layer increase, the electrical resistivity of the Cu-DCNT film layer and the electrical resistivity of the Al-DCNT film layer decrease, while the electrical conductivity of the Cu-DCNT film layer and the electrical conductivity of the Al-DCNT film layer increase. When the Cu layer has a thickness of 600 nm on the DCNT film layer surface, the electrical conductivity of the Cu-DCNT film layer is 4.76 × 10⁵ S·cm⁻¹, and the electrical conductivity of the Cu-DCNT film layer is similar to the electrical conductivity of the Cu foil. When the Al layer has a thickness of 900 nm on the DCNT film layer surface, the electrical conductivity of the Al-DCNT film layer is 2.26 × 10⁵ S·cm⁻¹ and the electrical conductivity of the Al-DCNT film layer is similar to the electrical conductivity of the Al foil.
3. The thickness, areal density, electrical conductivity, tensile strength, Young's modulus, toughness, and tensile strain of the DCNT film layer prepared at S2, and the Cu-DCNT film layer prepared at S3 of Example 1, the Al-DCNT film layer prepared at S3 of Example 6, the commercial Cu foil provided at S1 of Comparative Example 1, and the commercial Al foil provided at S2 of Comparative Example 2 were characterized. Test results are as shown in FIG. 6 and Table 1 below. In FIG. 6, part (a) is a diagram for the areal density test, part (b) is a diagram for the thickness test, and part (c) is a diagram for the tensile strength test.

**Table 1**

| | thickness (µm) | areal density (mg/cm²) | electrical conductivity (10⁵ S/cm) | tensile strength (Mpa) | young's modulus (GPa) | toughness (J/cm³) | tensile strain |
|---|---|---|---|---|---|---|---|
| Cu foil | 10 | 8.90 | 5.60 | 307 | 4.05 | 15.07 | 8.04 % |
| Al foil | 16 | 4.36 | 3.50 | 249 | 6.88 | 5.29 | 3.50 % |
| DCNT | 2 | 0.30 | 2.04 | 668 | 10.13 | 20.82 | 7.04 % |
| Cu-DCNT | 3.2 | 1.37 | 4.76 | 483 | 6.59 | 17.31 | 7.13 % |
| Al-DCNT | 3.8 | 0.82 | 2.26 | 450 | 4.78 | 22.25 | 8.41 % |

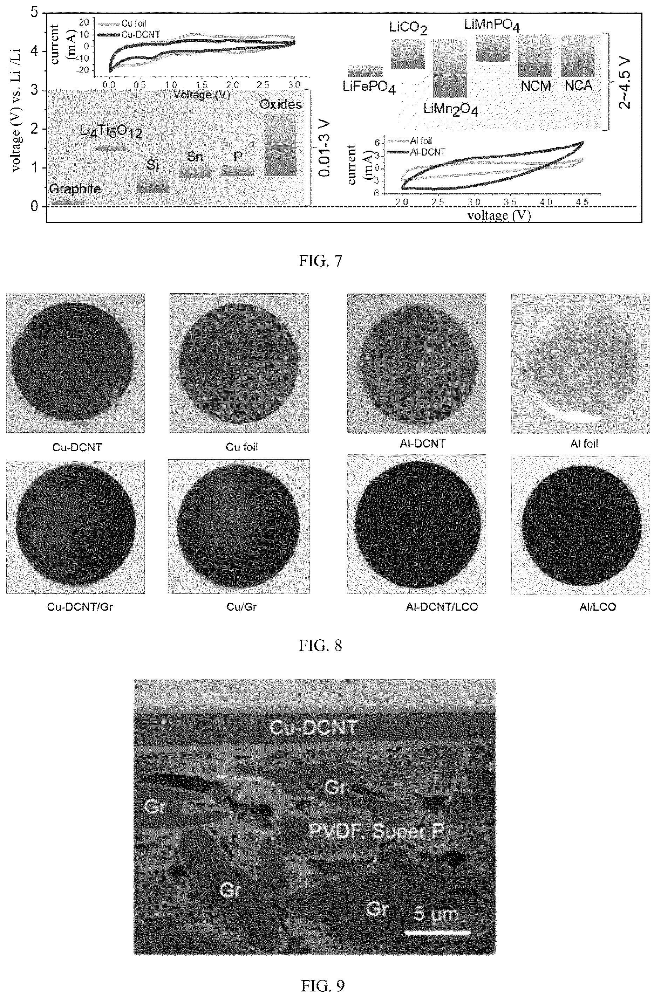

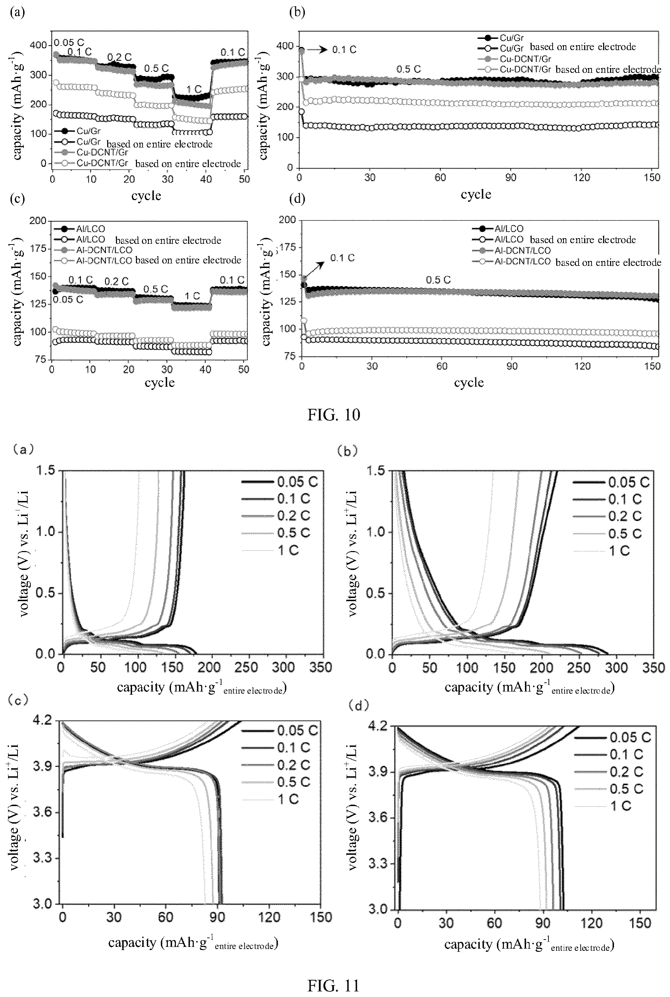

The test results above demonstrate that the Cu-DCNT film layer has an ultra-thin thickness of 3.2 µm which is 68.0% thinner than the commercial Cu foil and has an ultra-light areal density of 1.37 mg/cm² which is 84.6% lighter than the commercial Cu foil. Similarly, Al-DCNT film layer has an ultra-thin thickness of 3.8 µm which is76.3% thinner than the commercial Al foil, and has an ultra-light areal density of 0.82 mg/cm² which is 81.2% lighter than the commercial Al foil. Importantly, the toughness of the Cu-DCNT film layer reaches 17.31 J/cm³ which is 15% higher than the toughness of the commercial Cu foil; and the toughness of the Al-DCNT film layer reaches 22.25 J/cm³ which is 321% higher than the toughness of the commercial Al foil. Since the Cu-DCNT film layer and the Al-DCNT film layer both have a feature combination of ultra-lightweight, ultra-thinness, excellent toughness, excellent electrical conductivity, and non-porous structure, they hold great promise for practical application as the current collector in the battery industry.
4. Cyclic voltammetry (CV) tests were performed on the Cu-DCNT film layer sample prepared in Example 1, the Al-DCNT film layer sample prepared in Example 6, the commercial Cu foil provided at S1 in Comparative Example 1, and the commercial Al foil provided at S2 in Comparative Example 2. The results are shown in FIG. 7. As shown in FIG. 7, the Cu-DCNT film layer and the Cu foil exhibit similar electrochemical stability in a potential window of 0.01 V to 3.0 V in the CV test, the potential window covers most anode materials such as graphite (Gr), LTO (Li₄Ti₅O₁₂), Si, Sn, P, and oxides. As shown in FIG. 7, the Al-DCNT film layer and the Al foil also exhibited similar electrochemical stability in a potential window of 2.0 to 4.5 V in the CV test, the potential window covers a variety of cathode materials such as LiFePO₄ (LFP), LiCO₂ (LCO), LiMn₂O₄, LiNiₓCo_{y}MnzO₂ (NCM), and LiNi_{0.8}Co_{0.15}Al_{0.05}O₂ (NCA). It can be seen that m-DCNT has electrochemical stability similar to that of metal foil.
5. The Cu-DCNT/Gr sample prepared in Example 11, the Al-DCNT/LCO sample prepared in Example 13, the Cu/Gr sample prepared in Comparative Example 1, and the Al/LCO sample prepared in Comparative Example 2 were characterized as follows: ①, ②, ③, ④ and ⑤.
① As shown in FIG. 8, the Cu-DCNT, Cu foil, Al-DCNT, and Al foil respectively correspond to digital camera morphology images of the current collectors before electrode plate preparation. The current collectors are the Cu-DCNT film layer in Example 11, the Cu foil in Comparative Example 1, the Al-DCNT film layer in Example 13, and the Al foil in Comparative Example 2, respectively. As shown in FIG. 8, the Cu-DCNT/Gr, Cu/Gr, Al-DCNT/LCO, and Al/LCO respectively correspond to digital camera morphology images of electrode plates prepared by the current collectors. The electrode plates are the Cu-DCNT/Gr in Example 11, the Cu/Gr in Comparative Example 1, the Al-DCNT/LCO in Example 13, and the Al/LCO in Comparative Example 2.
② An SEM cross-sectional image of the Cu-DCNT/Gr sample prepared in Example 11 is shown in FIG. 9. As shown in FIG. 9, the Gr anode active material is well supported and bonded to the Cu-DCNT.
③ As shown in FIG. 10, parts (a) and (b) show the rate performance test results and cycling performance test results of the Cu-DCNT/Gr in Example 11and Cu/Gr samples in Comparative Example 1, respectively. The test results show that the initial discharge capacity of the Cu-DCNT/Gr sample is 370.9 mAh·g⁻¹ (based on the weight of the Gr anode active material), which is similar to the initial discharge capacity of the Cu/Gr sample (369.9 mAh·g⁻¹) in the first activation cycle at 0.05 C. Based on the total weight of the entire electrode, including the active material, conductive additive, binder, and current collector, the capacity of the Cu-DCNT/Gr sample is approximately 50% higher than the capacity t of the Cu/Gr sample. For example, the capacity of Cu-DCNT/Gr at 0.5C is 200.7 mAh·g⁻¹, a 51.6% increase over the capacity of Cu/Gr (132.4 mAh·g⁻¹). Additionally, the cycling characteristics of these electrodes are very similar. After 150 discharge/charge cycles, the capacity of Cu-DCNT/Gr is still approximately 50% higher than the capacity of Cu/Gr.
④ As shown in FIG. 10, parts (c) and (d) show the rate performance test results and cycling performance test results of Al-DCNT/LCO in Example 13 and Al/LCO in Comparative Example 2, respectively. The test results show: when calculated based on the mass of LCO, the capacities of Al-DCNT/LCO and Al/LCO are similar at different discharge rates, and when calculated based on the total mass of the entire electrode, the capacity of Al-DCNT/LCO is approximately 11% higher than the capacity of Al/LCO.
⑤ As shown in FIG. 11, parts (a) and (b) show curves of the charge-discharge voltage ranging from 0.01V to 1.5V for Cu-DCNT/Gr in Example 11and Cu/Gr in Comparative Example 1, respectively. The curves in both figures demonstrate the typical electrochemical characteristics of the Gr anode. Parts (c) and (d) show curves of the charge-discharge voltage ranging from 3.0 V and 4.2 V for Al-DCNT/LCO in Example 13 and Al/LCO in Comparative Example 2, respectively. The curves in both figures demonstrate the typical electrochemical characteristics of the LCO cathode.

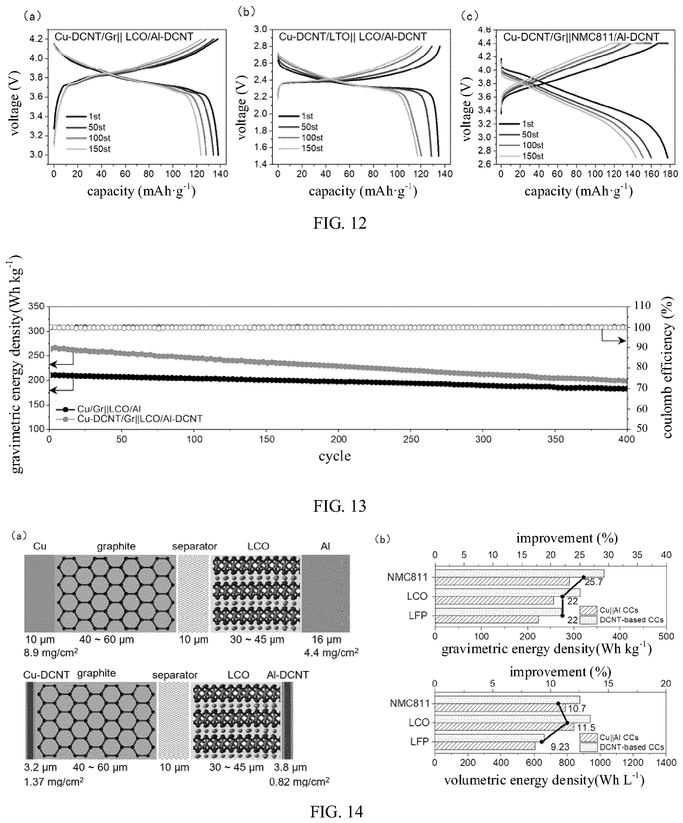

6. The coin-type full batteries that Cu-DCNT/Gr∥LCO/Al-DCNT, Cu-DCNT/LTO|LCO/Al-DCNT, and Cu-DCNT/Gr|NMC811/Al-DCNT respectively prepared in Examples 16 to 18 were characterized, and the results are shown in FIG. 12. In FIG. 12, parts (a), (b), and (c) show the charge-discharge curves of three full batteries that Cu-DCNT/Gr∥LCO/Al-DCNT, Cu-DCNT/LTO∥LCO/Al-DCNT, and Cu-DCNT/Gr||NMC811/Al-DCNT at different cycles, respectively. These curves exhibit typical plateau and capacity values close to those found in commercial batteries made with the same electrode pairs. These results demonstrate that m-DCNT can replace metal foil in the fabrication of various lithium-ion batteries.
7. The coin-type full batteries that Cu-DCNT/Gr∥LCO/Al-DCNT prepared in Example 16 and Cu/Gr∥Al/LCO prepared in Comparative Example 3 were characterized, and the characterization results are shown in FIG. 13. The test results demonstrate that the masses of the commercial metal foil or m-DCNT in Comparative Example 3, and the entire battery were normalized to compare their gravimetric energy density. The gravimetric energy density of Cu/Gr∥LCO/Al was 210 Wh kg⁻¹ (with a volumetric energy density of 710 Wh L⁻¹) at the initial cycle and maintained at 183 Wh kg⁻¹ after 400 cycles. In contrast, the gravimetric energy density of Cu-DCNT/Gr∥LCO/Al-DCNT was 264 Wh kg⁻¹ (with a volumetric energy density of 803 Wh L⁻¹) at the initial cycle and reached 198 Wh kg⁻¹ after 400 cycles. These results demonstrate that replacing metal foil with m-DCNT leads to a significant improvement in the energy density of entire battery.
8. The coin-type batteries prepared in Examples 16, 18, and 19, and the batteries prepared in Comparative Examples 4 to 9, were characterized. The results are shown in FIG. 14 and Table 2 below.

**Table 2**

| cathode capacity 2 mAh/cm² | gravimetric energy density / Wh kg⁻¹ | | | volumetric energy density / Wh L⁻¹ | | |
|---|---|---|---|---|---|---|
| Battery | LFP-Gr | LCO-Gr | NMC811-Gr | LFP-Gr | LCO-Gr | NMC811-Gr |
| Cu (10 µm)∥Al (16 µm) CC | 223.7 | 256.6 | 290.6 | 604.7 | 843.7 | 792.3 |
| Cu (6 µm)∥Al (16 µm) CC | 237.5 | 272.4 | 311.0 | 615.7 | 862.35 | 808.7 |
| m-DCNT based CCs | 273.0 | 313.2 | 365.25 | 660.5 | 940.3 | 876.9 |
| Improvement compared with Cu (10 µm)∥Al (16 µm) CC | 22.0 % | 22.0 % | 25.7 % | 9.2% | 11.45 % | 10.7 % |
| Improvement compared with Cu (6 µm)∥Al (16 µm) CC | 15.0 % | 15.0 % | 17.5 % | 7.3 % | 9.0% | 8.4 % |

| cathode capacity 3 mAh/cm2 | gravimetric energy density / Wh kg⁻¹ | | | volumetric energy density/ Wh L⁻¹ | | |
|---|---|---|---|---|---|---|
| Battery | LFP-Gr | LCO-Gr | NMC811-Gr | LFP-Gr | LCO-Gr | NMC811-Gr |
| Cu (10 µm)∥Al (16 µm) CC | 241.7 | 277.2 | 317.3 | 970.8 | 1375.6 | 1294.4 |
| Cu (6 µm)∥Al (16 µm) CC | 252.2 | 289.3 | 333.3 | 983.3 | 1397.6 | 1313.8 |
| m-DCNT based CCs | 277.8 | 318.7 | 372.9 | 1033.1 | 1486.4 | 1392.0 |
| Improvement compared with Cu (10 µm)∥Al (16 µm) CC | 15.0 % | 15.0 % | 17.5 % | 6.4 % | 8.05 % | 7.5 % |
| Improvement compared with Cu (6 µm)∥Al (16 µm) CC | 10.2 % | 10.2 % | 11.9 % | 5.1 % | 6.4 % | 6.0 % |

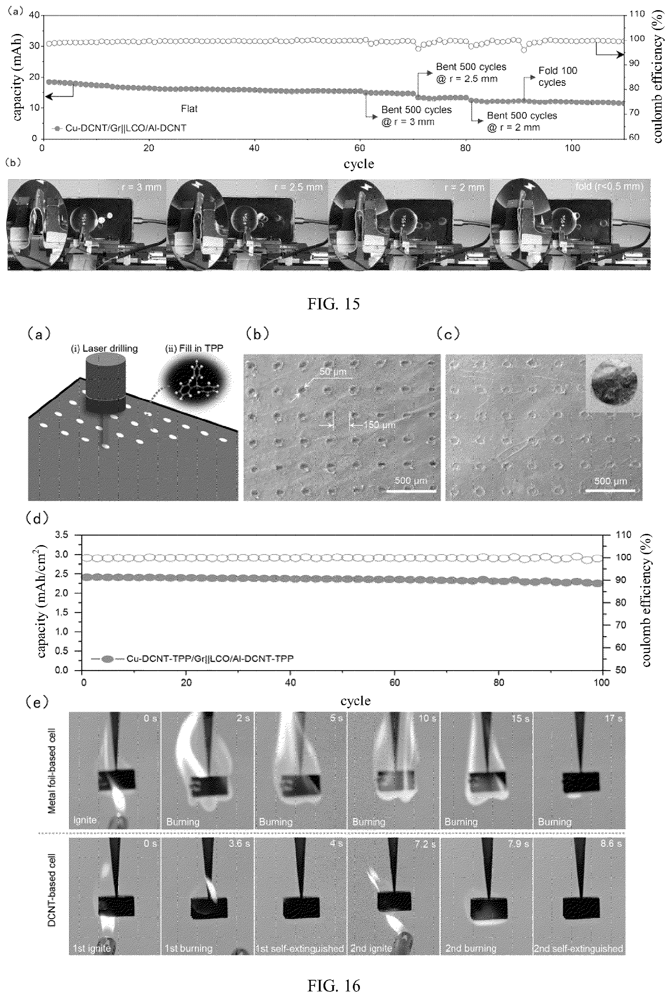

Test results show that at a cathode areal capacity of 2 mAh·cm⁻², replacing metal foil with m-DCNT film layer significantly increases the battery's gravimetric energy density by 22.0% to 25.7% and its volumetric energy density by 9.2% to 11.5%. Even compared to batteries using the thinnest commercial Cu foil (6 µm), improvements of 15.0% to 17.5% (gravimetric energy density) and 7.3% to 9.0% (volumetric energy density) are achieved. Compared to batteries with a high areal capacity of 3 mAh·cm⁻² and 6 µm Cu foil, improvements of 10.2% to 111.9% (gravimetric energy density) and 5.1% to 6.4% (volumetric energy density) are achieved.
9. The soft-pack battery Cu-DCNT/Gr∥LCO/Al-DCNT prepared in Example 20 was characterized. The test results are shown in part (b) of FIG. 15. The soft-pack battery was first laid flat for 60 cycles, then bent to different curvature radii (3 mm, 2.5 mm, and 2 mm) 500 times each, and finally folded 100 times. The test results, in part (a) of FIG. 15, show that the soft-pack battery functioned normally under these bending conditions, with no significant degradation caused by mechanical deformation observed. After a series of bending and folding tests, the soft-pack battery could easily be used to charge a smartphone when dynamically being bent or folded.
10. The samples prepared in Examples 21 to 23 were characterized, and the test results are shown in FIG. 16:
part (a) is a schematic diagram of drilling a DCNT film layer by a laser drilling method to prepare a DCNT film layer having a pore;
part (b) is an SEM image of the DCNT film layer having a pore formed after laser drilling;
part (c) is an SEM image of Cu-DCNT TPP;
part (d) shows the results of constant current cycling test of a Cu-DCNT TPP/Gr∥LCO/Al-DCNT TPP full battery at 0.5 C. The Cu-DCNT TPP/Gr∥LCO/Al-DCNT TPP battery operated stably with a high CE, demonstrating that Cu-DCNT TPP and Al-DCNT TPP are suitable current collectors for lithium-ion batteries;
part (e) shows the self-extinguishing test results of a Cu/Gr∥LCO/Al pouch cell (top) and a Cu-DCNT TPP/Gr∥LCO/Al-DCNT TPP (bottom). The test results show that after ignition, the soft-pack battery assembled by metal foil burned violently, lasting for over 17 seconds. In contrast, the flame on the m-DCNT-based battery burned weakly and self-extinguished within 4 seconds; upon re-ignition of the sample, the flame remained weak and self-extinguished again within 2 seconds.

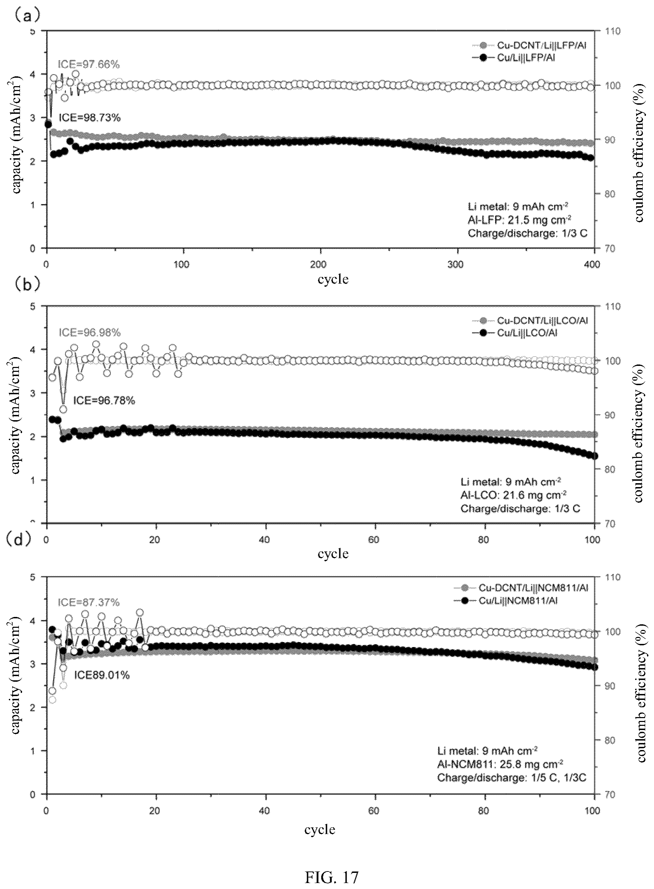

11. A lithium metal battery (LMB) was assembled by the Cu-DCNT sample prepared in Example 1 and the commercial Cu foil current collector provided in Comparative Example 1. The LMB was tested cycling performance as follows: a lithium metal anode was prepared by depositing a 9 mAh/cm² lithium metal anode on either the Cu-DCNT or the Cu foil current collector, the lithium metal anode was assembled with different cathodes respectively to obtain entire batteries. The test results are shown in FIG. 17.

Part (a) in FIG. 17 shows an entire battery assembled with lithium iron phosphate (LFP) as the cathode. The initial Coulombic efficiency (ICE) of the Cu/Li∥Al/LFP battery is slightly lower than the ICE of the Cu-DCNT/Li∥LFP/Al battery, where the ICE of the Cu-DCNT/Li∥LFP/Al battery is 97.66%. After 400 cycles at 1/3 C, the capacity retention rates of the entire battery of Cu-DCNT/Li∥LFP/Al and Cu/Li∥LFP/Al are 84.7% and 73.1%, respectively.

Part (b) in FIG. 17 shows an entire battery assembled with lithium cobalt oxide (LCO) as the cathode. The initial Coulombic efficiency (ICE) of the entire battery of Cu-DCNT/Li||LCO/Al and Cu/Li∥LCO/Al are 96.98% and 96.78%, respectively. In the final few cycles, the capacity of the Cu/Li∥LCO/Al decreases more significantly than the capacity of the Cu-DCNT/Li∥LCO/Al.

Part (c) in FIG. 17 shows an entire battery assembled with lithium nickel cobalt manganese oxide (NCM811) as the cathode. The initial Coulombic efficiency (ICE) of the Cu-DCNT/Li∥NCM811/Al and Cu/Li∥NCM811/Al full cells was 87.37% and 89.01%, respectively. After 100 cycles, the capacity retention rates of the Cu-DCNT/Li∥NCM811/Al and Cu/Li∥NCM811/Al full cells were 85.1% and 77.1%, respectively.

The test results in FIG. 17 indicate that the Cu-DCNT CC exhibits electrochemical performance similar to or even better than electrochemical performance of the Cu foil CC.

The above are merely optional embodiments of the present application and are not intended to limit the present application. Persons skilled in the art will readily appreciate that various modifications and variations of the present application are possible. Any modifications, equivalent substitutions, improvements, etc. made within the spirit and principles of the present application are intended to be within the scope of the claims of the present application.

## Claims

1. A current collector, **characterized in that** the current collector comprises a densified carbon nanotube film layer and a metal layer bonded to a surface of the densified carbon nanotube film layer.

2. The current collector according to claim 1, **characterized in that** the metal layer is a copper layer or an aluminum layer.

3. The current collector according to claim 1, **characterized in that** the metal layer has a thickness less than or equal to 900 nm.

4. The current collector according to claim 1, **characterized in that** the current collector has a thickness of 3.2 µm to 3.8 µm, an areal density of 0.82 mg/cm² to 1.37 mg/cm², and a toughness of 17.31 J/cm³ to 22.25 J/cm³.

5. The current collector according to claim 1, **characterized in that** the densified carbon nanotube film layer has a density of 1 mg/mm³ to 2 mg/mm³.

6. The current collector according to any one of claims 1 to 5, **characterized in that** the densified carbon nanotube film layer has a pore filled with a flame retardant.

7. The current collector according to claim 6, **characterized in that** the pore is one of a plurality of pores, the plurality of pores are arranged apart, an average spacing between two adjacent pores of the plurality of pores is 100 µm to 200 µm, and an average pore size of the pore is 40 µm to 60 µm.

8. The current collector according to claim 6, **characterized in that** the flame retardant comprises at least one of triphenyl phosphate, tris(2-chloroethyl) phosphate, tris(2,3-dichloropropyl) phosphate, tris(2,3-dibromopropyl) phosphate, cresyl diphenyl phosphate, tricresyl phosphate, (2-ethylhexyl) diphenyl phosphate, and tetrabromobisphenol A.

9. A preparation method for a current collector, **characterized in that** the preparation method comprising:
providing a carbon nanotube and performing densification treatment on the carbon nanotube to obtain a densified carbon nanotube film layer; and
growing a metal layer on a surface of the densified carbon nanotube film layer.

10. The preparation method for the current collector according to claim 9, **characterized in that** the carbon nanotube is prepared by a floating catalyst chemical vapor deposition method.

11. The preparation method for the current collector according to claim 9, **characterized in that** the metal layer is deposited on the surface of the densified carbon nanotube film layer by vacuum deposition, electroplating, or chemical plating.

12. The preparation method for the current collector according to claim 9, **characterized in that** the densification treatment for the carbon nanotube comprises: an annealing treatment, a sulfuric acid treatment, and a chlorosulfonic acid treatment for a carbon nanotube film.

13. The preparation method for the current collector according to claim 12, **characterized in that**
the annealing treatment comprises heating the carbon nanotube film at 900°C to 1100°C in a protective atmosphere for 12 hrs to 24 hrs; and/or
the sulfuric acid treatment comprises immersing the carbon nanotube film in a concentrated sulfuric acid for 12 hrs to 36 hrs; and/or
the chlorosulfonic acid treatment comprises: dropwise adding excess chlorosulfonic acid to the carbon nanotube film, left to stand for 10 mins to 60 mins, and heating the carbon nanotube film at 130°C to 190°C to completely volatilize the chlorosulfonic acid.

14. The preparation method for the current collector according to any one of claims 9 to 13, **characterized in that** before growing the metal layer on the surface of the densified carbon nanotube film layer, the preparation method further comprises: drilling a pore in the densified carbon nanotube film layer and filling the pore with a flame retardant.

15. The preparation method for the current collector according to claim 14, **characterized in that** drilling the pore in the densified carbon nanotube film layer by a laser drilling method.

16. The preparation method for the current collector according to claim 14, **characterized in that** filling the flame retardant into the pore by a vacuum-assisted infiltration process.

17. An electrode plate, **characterized in that** the electrode plate comprises the current collector according to any one of claims 1 to 8 or the current collector prepared by the preparation method for the current collector according to any one of claims 9 to 16, and an active material layer bonded to at least one side of the current collector.

18. The electrode plate according to claim 17, **characterized in that** the active material layer is an anode active material layer, comprising at least one of graphite, Li₄Ti₅O₁₂, Si, Sn, and P; or, the active material layer is a cathode active material layer, comprising at least one of LiFePO₄, LiCO₂, LiMn₂O₄, LiNiₓCo_{y}Mn_{z}O₂, and LiNi_{0.8}Co_{0.15}Al_{0.05}O₂.

19. A battery, **characterized in that** the battery comprises the electrode plate according to any one of claims 17 to 18.

20. An electrical apparatus, **characterized in that** the electrical apparatus comprises the battery according to claim 19.
